# EUROPEAN PATENT APPLICATION

(11) **EP 4 407 712 A1**
(43) Date of publication of application: **31.07.2024**
(21) Application number: 23843967.3
(22) Date of filing: 29.08.2023
(51) Int. Cl.: H01M 4/36, H01M 4/587, H01M 4/38, H01M 4/62, H01M 10/0525

(54) **NEGATIVE ELECTRODE MATERIAL AND LITHIUM ION BATTERY**

(30) Priority: 14.12.2022 CN 202211611648
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: XIAO, Chengmao, Shenzhen, Guangdong 518106 (CN); HE, Peng, Shenzhen, Guangdong 518106 (CN); GUO, Eming, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2023/115540
(87) International publication number: WO 2024/124966

(57) **Abstract**

The present disclosure provides an anode material and a lithium ion battery. The anode material comprises a composite, and the composite comprises a carbon matrix and an active material located in the carbon matrix, the active material comprises primary particles and/or agglomerates and aggregates, and a proportion of the aggregates in a total number of the primary particles, the agglomerates and the aggregates is smaller than or equal to 30%. According to the anode material and the lithium ion battery provided by the present disclosure, the volume expansion of the anode material can be reduced, and the rate performance and the cycle stability of the anode material are improved.

## Description

### CROSS-REFERENCE TO RELATED APPLICATIONS

This present application claims priority to Chinese Patent Application No. 2022116116483, entitled "ANODE MATERIAL AND LITHIUM ION BATTERY" filed on May 14, 2022, the content of which is incorporated herein by reference in its entirety.

### TECHNICAL FIELD

The present disclosure relates to a field of anode materials, and in particular, to an anode material and a lithium ion battery.

### BACKGROUND

Electrified new energy vehicles are a future development direction of the automotive market, and the core component thereof is a lithium ion battery. With the development of the market, the demand for batteries with high energy density is increasing, and the use of novel high-specific capacity cathode and anode materials is one of the important methods for improving the energy density of a battery.

More and more new materials such as metal, oxide and metal alloy are applied as an active material in an anode material, to continually explore various ways to improve the energy density of the battery. Taking a silicon-based anode material as an example, the silicon-based anode material, as one of the above active materials, is generally considered to be a next-generation anode material, which has an ultra-high theoretical specific capacity (4200mAh/g) and a lower de-lithiation potential (<0.5V). In addition, a voltage platform of silicon is slightly higher than that of graphite, which is difficult to cause lithium precipitation on the surface during charging, thereby enhancing the better safety performance and receiving high praise. However, a silicon anode has a severe volume expansion effect in a cycle process, which causes the material to be pulverized and crushed, and the cycle attenuation of the battery is fast. In view of this issue, there are multiple solutions at present, including structural design of silicon, utilization of techniques such as nanomization and porosification, and improvement of composite coating and the like. The design of various novel silicon-carbon composite structures is one of the main directions of current improvement.

Therefore, how to suppress a volume expansion of the anode material and improve cycling stability is an urgent problem to be solved at present.

### SUMMARY

The present disclosure proposes an anode material and a lithium ion battery, which can reduce a volume expansion of the anode material, and improve the rate performance and the cycle stability of the anode material.

In a first aspect, the present disclosure provides an anode material. The anode material includes a composite. The composite includes a carbon matrix and an active material located in the carbon matrix, and the active material includes primary particles and/or agglomerates, and aggregates; and a proportion of the aggregates in a total number of the primary particles, the agglomerates, and the aggregates is smaller than or equal to 30%.

In some embodiments, the active material includes at least one of Li, Na, K, Sn, Ge, Si, SiOₓ, Fe, Mg, Ti, Zn, Al, P, Cu, and a silicon alloy, where 0<x≤2.

In some embodiments, the active material includes a silicon-based active material, and the silicon-based active material includes at least one of crystalline silicon, amorphous silicon, and the silicon alloy.

In some embodiments, the agglomerates include the primary particles connected in a first connection manner, and the first connection manner includes at least one of an angle-angle connection and an edge-angle connection.

In some embodiments, a proportion of a total number of the agglomerates and the primary particles among a total number of the primary particles, the agglomerates and the aggregates is greater than or equal to 70%.

In some embodiments, the aggregates include the primary particles connected in a second connection manner, and the second connection manner includes at least one of an edge-to-edge connection and an embedding connection.

In some embodiments, the anode material further includes a coating layer located on at least a part of a surface of the composite.

In some embodiments, the coating layer includes at least one of a carbon layer, a graphene layer, a silicon nitride layer, a titanium nitride layer and a silicon carbide layer.

In some embodiments, a thickness of the coating layer ranges from 5nm to 500nm.

In some embodiments, a median particle size of the primary particles ranges from 1nm to 500nm.

In some embodiments, a median particle size of the anode material ranges from 0.5µm to 30µm.

In some embodiments, a specific surface area of the anode material is smaller than or equal to 10m²/g.

In some embodiments, a porosity of the anode material is smaller than or equal to 10%.

In some embodiments, a sphericity degree of the anode material ranges from 0.7 to 1.0.

According to a second aspect, the present disclosure provides a lithium ion battery, including the anode material according to the first aspect.

The technical solution of the present disclosure has at least the following beneficial effects:

According to the anode material provided by the present disclosure, the active material in the anode material is dispersed in the carbon matrix, and the active material can be combined with the carbon matrix to realize uniform distribution in the carbon matrix. In addition, the active material includes the primary particles and/or the agglomerates and the aggregates, and the number proportion of the aggregates located in the carbon matrix is controlled to be smaller than or equal to 30%, so that the number of the agglomerated primary particles is effectively reduced, and the dispersion degree of the primary particles is improved, thereby solving the problem that carrier transmission between the agglomerated primary particles is not smooth. Meanwhile, the volume expansion of the active material can be inhibited, and the cycle stability of the anode material is improved.

### BRIEF DESCRIPTION OF DRAWINGS

The present disclosure will be further described below with reference to the accompanying drawings and embodiments.
FIG. 1 is a schematic diagram of primary particles, agglomerates, aggregates, a first connection manner, and a second connection manner in an anode material according to the present disclosure;
FIG. 2 is a scanning electron microscope SEM image of the anode material prepared in Example 1 of the present disclosure;
FIG. 3 is an XRD pattern of the anode material prepared in Example 1 of the present disclosure;
FIG. 4 is a first charging and discharging curve of a battery made of the anode material prepared in Example 1 of the present disclosure; and
FIG. 5 is a cycle performance curve of a battery made of the anode material prepared in Example 1 of the present disclosure.

### DESCRIPTION OF EMBODIMENTS

Preferred embodiments of the present disclosure are described as follows, it should be noted that modifications and adaptations may be made to those skilled in the art without departing from the principles of the present disclosure, which are also deemed to fall within the scope of the present disclosure.

In an embodiment, the present disclosure provides an anode material. The anode material includes a composite, and the composite includes a carbon matrix and an active material located in the carbon matrix. The active material includes primary particles and/or agglomerates and aggregates, and the proportion of the aggregates in a total number of the primary particles, the agglomerates and the aggregates is smaller than or equal to 30%.

According to the anode material provided by the present disclosure, the active material in the anode material is dispersed in the carbon matrix, and the active material can be combined with the carbon matrix to realize uniform distribution in the carbon matrix. In addition, the active material includes the primary particles and/or the agglomerates and the aggregates, and the number proportion of the aggregates located in the carbon matrix is controlled to be smaller than or equal to 30%, so that the number of the agglomerated primary particles is effectively reduced, and the dispersion degree of the primary particles is improved, thereby solving the problem that carrier transmission between the agglomerated primary particles is not smooth. Meanwhile, a volume expansion of the active material can be inhibited, and the cycle stability of the anode material is improved.

In some embodiments, the active material refers to a substance that can react with lithium for lithium de-intercalation.

The active material includes at least one of an elemental metal, a non-metal element, a metal oxide, and a metal alloy. In some embodiments, the active material includes at least one of Li, Na, K, Sn, Ge, Si, SiOx, Fe, Mg, Ti, Zn, Al, P, and Cu, where 0<x≤2.

In some other embodiments, the active material may also be a silicon alloy, such as a silicon lithium alloy or a silicon magnesium alloy.

In some other embodiments, the active material may also be an oxide, such as silicon oxide. Of course, it should be noted that, in some cases, the active material includes at least two of the elemental metal, the non-metal element, the metal alloy, and the metal oxide.

In some embodiments, the active material includes a silicon-based active material, and the silicon-based active material includes at least one of crystalline silicon, amorphous silicon, and the silicon alloy.

In some embodiments, the active material is particles, and the active material includes the primary particles, the agglomerates, and the aggregates, and the mass proportion of the aggregates in the active material is smaller than or equal to 30%.

In some embodiments, the primary particles refer to monodisperse particles under an electron microscope.

In some embodiments, a median particle size of the primary particles ranges from 1nm to 500nm. Specifically, it can be 1nm, 5nm, 10nm, 15nm, 20nm, 30nm, 40nm, 50nm, 100nm, 200nm, 300nm, 400nm, or 500nm, and so on, or other values within the above range, which are not limited herein. Nanoscale primary particles have high surface energy, and are prone to agglomeration during charging and discharging. The structure of the particles is strong, which can inhibit the volume expansion of active particles. However, since the nanoscale active particles have high surface energy and are prone to agglomeration to form the agglomerates or the aggregates during charging and discharging, the primary particles are dispersed in the carbon matrix, which can reduce the agglomeration effect. If the particle size of the active material is too small, production cost will be high. In an embodiment, the median particle size of the primary particles ranges from 1nm to 200nm, and more preferably 1nm to 100nm.

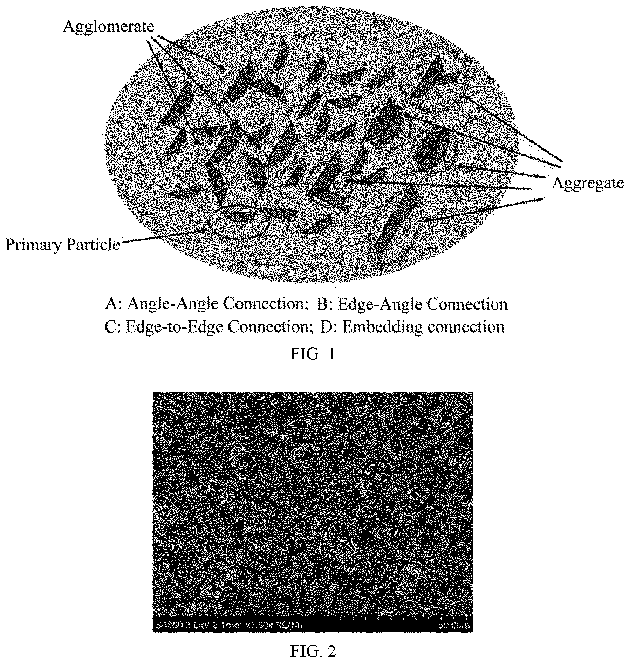

In some embodiments, as shown in FIG. 1, the agglomerates includes the primary particles connected in the first connection manner, and the first connection manner includes at least one of an angle-angle connection and an edge-angle connection. It can be understood that in the agglomerates, the primary particles are particle clusters connected in a relatively loose connection manner.

In some embodiments, a ratio of the total number of the agglomerates and the primary particles among a total number of the primary particles, the agglomerates and the aggregates are greater than or equal to 70%. The agglomerates and the aggregates are relatively dispersed, which is beneficial to relieving the volume expansion.

In some embodiments, as shown in FIG. 1, the aggregates includes the primary particles connected in the second connection manner, and the second connection manner includes at least one of an edge-to-edge connection and an embedding connection. In the aggregates, active material particles are connected in a relatively tight manner.

It should be noted that all primary particles in the agglomerates are connected in the first connection manner. At least two primary particles in the aggregates are connected in the second connection manner. In other words, if the first connection manner and the second connection manner both exist among the primary particles, statistics is performed as aggregates. The contents of the primary particles, the agglomerates and the aggregates in the anode material refer to the situation observed from a SEM section.

In some embodiments, the primary particles, the agglomerates, and the aggregates are embedded in the carbon matrix. Under the wrapping and blocking action of the carbon matrix, the agglomeration effect of different forms of the active material during charging and discharging can be inhibited, and the buffering action force of the carbon matrix can be effectively utilized to inhibit the volume expansion of the active material.

In some embodiments, the specific surface area of the anode material is smaller than or equal to 10m²/g, and the specific surface area of the anode material may specifically be 10m²/g, 9m²/g, 8m²/g, 7m²/g, 6m²/g, 5m²/g, and 3m²/g, or may be other values within the above range, which is not limited herein.

In some embodiments, the porosity of the anode material is smaller than or equal to 10%, e.g., 0.5%, 0.7%, 0.9%, 1.5%, 2.0%, 3.5%, 5.0%, 6.5%, 7.5%, 8.0%, or 10%, which is not limited herein. The porosity of the anode material is controlled within the above range, indicating that the electrolyte does not easily permeate into the material, which is beneficial to improving the stability of the anode material. Preferably, the porosity of the anode material is smaller than or equal to 5%, and further preferably, the porosity of the anode material is smaller than or equal to 2.5%.

In some embodiments, the median particle size of the anode material is 0.5µm to 30µm. Optionally, the median particle size of the anode material may specifically be 0.5µm, 1µm, 5µm, 10µm, 11µm, 12µm, 13µm, 15µm, 17µm, 18µm, 19µm, 20µm, 25µm, or 30µm, which is not limited herein. Within this particle size range, it is beneficial to obtain products with a small specific surface area and a high tap density, which can reduce the loss of lithium ions, reduce the irreversible capacity loss during charging and discharging, and improve the electrochemical performance of the anode material.

In some embodiments, the anode material further includes a coating layer located on at least a part of a surface of the composite.

In some embodiments, the coating layer includes at least one of a carbon layer, a graphene layer, a silicon nitride layer, a titanium nitride layer and a silicon carbide layer. In an embodiment, the coating layer may be a carbon layer.

In some embodiments, a thickness of the coating layer is 5nm to 500nm, e.g., 5nm, 10nm, 30nm, 50nm, 80nm, 100nm, 200nm, 300nm, 400nm, or 500nm, or may also be other values within the above range, which is not limited herein.

In some embodiments, the anode material is spherical or sphere-like. A spherical particle morphology enables the anode material to have a better tap density, a high isotropy, a low specific surface area and a low surface defect, so that the anode material has high compaction density, better charging and discharging performance, and higher reversible capacity and first efficiency.

In some embodiments, the sphericity degree of the anode material is 0.7 to 1.0, e.g., 0.7, 0.8, 0.85, 0.89, 0.91, 0.92, 0.93, 0.94, 0.95, 0.96, 0.97, 0.98, or 1.0, which is not limited herein. In the present disclosure, the sphericity degree refers to a ratio of a shortest diameter to a longest diameter of a particle.

The present disclosure further provides a method for preparing an anode material. The method includes following steps S100 to S300.

S 100, an oil solution containing primary particles of an active material is mixed with a second solution containing a carbon source precursor and a surfactant to obtain an emulsion. A solvent in the second solution is incompatible with the oil solution.

S200, the emulsion is dried and granulated to obtain a precursor.

S300, the precursor and the second carbon source are mixed and coated, and then carbonized to obtain an anode material.

According to the method for preparing the anode material provided by the present disclosure, the primary particles of the active material are firstly dispersed in the oil solution, and then the oil solution is mixed with the second solution containing the carbon source precursor and the surfactant to form the oil-in-water or oil-in-oil emulsion. Since the second solution contains the surfactant, a single small liquid bead is dispersed smaller under an oil/solvent incompatibility mechanism, so that the dispersion degree of the primary particles of the active material is improved, thereby controlling the number of aggregates in the anode material, effectively reducing the number of the agglomerated primary particles, and solving the problem that the carrier transmission between the agglomerated primary particles is not smooth. Meanwhile, the volume expansion of the active material can be inhibited, and the cycle stability of the anode material is improved.

This solution will be described below in detail.

Prior to step S 100, the method further includes:
preparing the oil solution containing the primary particles of the active material, and the second solution containing the carbon source precursor and the surfactant.

It can be understood that an oil phase solvent is used as the solvent in the oil solution, and the oil phase solvent is immiscible with the solvent in the second solution.

In some embodiments, the oil-phase solvent includes at least one of an aromatic hydrocarbon compound, an aliphatic hydrocarbon compound, a halogenated hydrocarbon compound, an alcohol compound, an ether compound, an ester compound, a ketone compound, a diol derivative compound, acetonitrile, pyridine, and phenol.

In some embodiments, the aromatic hydrocarbon compound includes at least one of benzene, toluene, xylene, ethylbenzene, biphenyl, and styrene.

In some embodiments, the aliphatic hydrocarbon compound includes at least one of pentane, hexane, and octane.

It should be noted that the aliphatic hydrocarbon compound may be a linear aliphatic hydrocarbon, a branched aliphatic hydrocarbon, or an alicyclic hydrocarbon. Alipocyclic hydrocarbon compounds include cyclohexane, cyclopentane, cyclohexanone, toluene cyclohexanone, and the like.

In some embodiments, the halogenated hydrocarbon compound includes at least one of chlorobenzene, dichlorobenzene, dichloromethane, and trichloromethane.

In some embodiments, the alcohol compound includes at least one of n-butanol and n-pentanol.

In some embodiments, the ester compound includes at least one of methyl acetate, ethyl acetate, and propyl acetate.

In some embodiments, the ketone compound includes at least one of acetone, methyl butanone, and methyl isobutyl ketone.

In some embodiments, the diol derivative compound includes at least one of ethylene glycol monomethyl ether, ethylene glycol monoethyl ether, and ethylene glycol monobutyl ether.

In some embodiments, the active material refers to the substance that can react with the lithium for the lithium de-intercalation. The active material includes at least one of the elemental metal, the non-metal element, the metal oxide, and the metal alloy.

In some embodiments, the active material includes at least one of Li, Na, K, Sn, Ge, Si, SiOx, Fe, Mg, Ti, Zn, Al, P, and Cu, where 0<x≤2.

In some other embodiments, the active material may also be the silicon alloy, such as the silicon lithium alloy or the silicon magnesium alloy. In some other embodiments, the active material may also be the oxide, such as the silicon oxide. Definitely, it is noted that, in some instances, the active material includes at least two of the elemental metal, the metal alloy, and the metal oxide.

In some embodiments, the active material includes a silicon-based active material, and the silicon-based active material includes at least one of crystalline silicon, amorphous silicon, and the silicon alloy.

In some embodiments, the median particle size of the primary particles of the active material is 1nm to 500nm, e.g., 1nm, 5nm, 10nm, 15nm, 20nm, 30nm, 40nm, 50nm, 100nm, 200nm, 300nm, 400nm, or 500nm, or may also be other values within the above ranges, which are not limited herein. The nanoscale primary particles of the active material have high surface energy, and are prone to agglomeration during charging and discharging. The structure of the particles is strong, and can inhibit the volume expansion of the primary particles of the active material. However, since the nanoscale primary particles of the active material have high surface energy and are prone to agglomeration to form the agglomerates or the aggregates during charging and discharging, the primary particles of the active material are dispersed in the carbon matrix, which can reduce the agglomeration effect of the primary particles of the active material. The particle size of the primary particles of the active material is too small, and the production process cost is high. In an embodiment, the median particle size of the primary particles of the active material ranges from 1nm to 200nm, and more preferably 1nm to 100nm.

In some embodiments, the mass ratio of the primary particles of active material in the oil solution is 8% to 38%, which may specifically be 8%, 10%, 12%, 15%, 18%, 20%, 25%, 30%, 35% or 38%, or may be other values within the above range, which is not limited herein.

In some embodiments, the carbon source precursor includes at least one of sucrose, fructose, glucose, asphalt, phenolic resin, polyimide, citric acid, polyvinyl alcohol, epoxy resin, polyurethane, amino resin, polystyrene, polyimide, acrylic acid, polyacrylic acid, oxalic acid, citric acid, fatty acid, n-eicosanoic acid, polyethylene glycol, cyanoacrylate, acetylated hydroxypropyl cellulose, cellulose acetate butyrate, and the like.

In some embodiments, the surfactant includes at least one of cetyl trimethyl ammonium bromide (CTAB), linear sodium alkyl benzene sulfonate (LAS), sodium fatty alcohol polyoxyethylene ether sulfate (AES), ammonium fatty alcohol polyoxyethylene ether sulfate ( AESA), sodium lauryl sulfate (SDS), lauroyl glutamic acid, nonylphenol polyoxyethylene ether (TX-10), glyceryl stearate monoester, lignosulfonate, heavy alkyl benzene sulfonate, alkyl sulfonate (petroleum sulfonate), sodium methylene dinaphthalenesulfonate (NNO), sodium methylene dinaphthalenesulfonate sulfonate (MF), alkyl polyether (PO-EO copolymer), and fatty alcohol polyoxyethylene ether (AEO-3).

In some embodiments, the solvent in the second solution includes at least one of a polar aprotic organic phase, a polar protic organic phase, a non-polar organic phase, and water. In the above solvent, the polar aprotic organic phase, the polar protic organic phase and the non-polar organic phase may form an oil-in-water emulsion with the oil solution, and the water and the oil solution may form an oil-in-water emulsion. The single small liquid bead is dispersed smaller under the oil/solvent incompatibility mechanism, so that the dispersion degree of the primary particles of the active material is improved, thereby controlling the number content of aggregates in the anode material.

In some embodiments, the polar aprotic organic phase includes N, N-dimethylformamide (DMF). The polar protic organic phase includes methanol. The non-polar organic phase includes at least one of octane, perfluorooctane, and perfluorohexane.

In some embodiments, a mass ratio of the oil solution to the second solution is (50 to 100):(40 to 70), e.g., 100:48, 70:40, 80:40, 50:70, or 50:50, or may also be other values within the above range, which is not limited herein.

In some embodiments, before the step of mixing the oil solution containing the primary particles of the active material with the second solution containing the carbon source precursor and the surfactant, the method further includes: adding the primary particles of the active material into the oil-phase solvent for a dispersion treatment. The primary particles are dispersed, so that the primary particles of the active material in the oil solution can be dispersed, and the situation that the primary particles of the active material are agglomerated together is reduced.

In some embodiments, before the step of mixing the oil solution containing the primary particles of the active material with the second solution containing the carbon source precursor and the surfactant, the method further includes: adding the carbon source precursor and the surfactant into water for a dispersion treatment. The dispersion treatment enables the formation of a uniformly mixed solution.

In some embodiments, the dispersion treatment includes at least one of magnetic stirring, mechanical stirring, milling dispersion, and ultrasonic dispersion. Preferably, the milling dispersion is adopted, so that the primary particles of the active material can be dispersed, so that the situation that the primary particles of the active material are agglomerated together is reduced, and the active material can be dispersed into smaller nanoparticles. In an embodiment, by adopting a wet ball milling, the dispersion time of the wet ball milling may be controlled at 0.5 hours to 10 hours, which may specifically be 0.5 hour, 1 hour, 2 hours, 3 hours, 4 hours, 5 hours, 6 hours, 7 hours, 8 hours, 9 hours, or 10 hours, or may also be other values within the above range, which is not limited herein. It can be understood that the components can be mixed more uniformly by sufficient milling, so that the particle size of the primary particles of the active material reaches 1nm to 500nm.

S 100, the oil solution containing the primary particles of the active material is mixed with the second solution containing the carbon source precursor and the surfactant to obtain the emulsion. The solvent of the second solution is incompatible with the oil solution.

In some embodiments, the mixing treatment mode of the oil solution and the second solution includes at least one of vacuum mixing and stirring mixing. The dispersed primary particles of the active material can be attached to the carbon source precursor by mixing treatment, so that the agglomeration effect among the primary particles of the active material is reduced.

In some embodiments, the mixing treatment is performed in a homogenizer, and a time of the mixing treatment is 1 hour to 10 hours, which may specifically be 1 hour, 2 hours, 3 hours, 4 hours, 5 hours, 6 hours, 7 hours, 8 hours, 9 hours, or 10 hours, or other values within the above range, which is not limited herein.

S200, the emulsion is dried and granulated to obtain the precursor.

In some embodiments, the drying temperature is 30°C to 400°C, e.g., 30°C, 40°C, 50°C, 80°C, 100°C, 120°C, 150°C, 180°C, 200°C, 250°C, 280°C, 300°C, or 400°C. The drying treatment time is 1 hour to 15 hours, e.g., 1 hour, 3 hours, 5 hours, 7 hours, 9 hours, 10 hours, 12 hours, or 15 hours. The drying treatment method may be, for example, furnace drying, freeze drying, stirring evaporation drying, rotary evaporation drying, or spray drying, and the drying treatment in this example may remove the solvent in the emulsion as much as possible.

S300, the precursor and the second carbon source are mixed and coated, and then carbonized to obtain the anode material.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the device for mixing and coating includes at least one of a mechanical fusion machine, a fusion mixer, and a convective fusion machine.

In some embodiments, the temperature of the carbonization treatment is 600°C to 1200°C, e.g., 600°C, 700°C, 800°C, 900°C, 1000°C, 1100°C, or 1200°C. Preferably, the temperature of the carbonization treatment is 600°C to 1000°C.

In some embodiments, the carbonization treatment time is 1 hour to 10 hours, e.g., 1 hour, 2 hours, 3 hours, 4 hours, 5 hours, 6 hours, 7 hours, 8 hours, 9 hours, or 10 hours, which is not limited herein.

In some embodiments, a protective gas is introduced during the carbonization process, which includes at least one of nitrogen, helium, neon, argon, and krypton.

Further, the method further includes: sieving and demagnetizing the carbonized material to obtain the anode material.

In some embodiments, the sieving manner includes any one of a stationary sieve, a drum sieve, a resonance sieve, a roller sieve, a vibrating sieve and a chain sieve. The mesh number for sieving is 100 meshes to 500 meshes, e.g., 100 meshes, 200 meshes, 250 meshes, 325 meshes, 400 meshes, and 500 meshes, and preferably 250 meshes. The particle size of the anode material is controlled within the above range, which is beneficial to improving the processing performance of the anode material.

In some embodiments, the demagnetizing device is any one of a permanent magnet drum magnetic separator, an electromagnetic iron remover and a pulsating high gradient magnetic separator, and the demagnetizing is to ultimately control the magnetic substance content of the anode material, reduce the discharge effect of the magnetic substance on the lithium ion battery, and ensure the safety of the battery during use.

An embodiment of the present disclosure further provides a lithium ion battery, which adopt the anode material provided in the above embodiments of the present disclosure or the anode material prepared by the method for preparing the anode material provided in the above embodiments of the present disclosure. The lithium ion battery provided by the embodiments of the present disclosure has the advantages of a high capacity, a high first-effect, a long cycle service life, an excellent rate performance and a low expansion.

### Test Methods:

### 1) Test method for particle size of anode material

A particle size test method was referred to GB/T 19077-2016. A laser particle size analyzer, such as a Mastersizer model 3000 laser particle size analyzer from Mark Instruments Co., Ltd., United Kingdom, was conveniently measured.

### 2) Test method for specific surface area of anode material

At constant low temperature, after an adsorption amount of gas at different relative pressures on a solid surface was measured, the adsorption amount of a sample monomolecular layer was obtained based on a Brunauer-Emmett-Teller adsorption theory and the formula thereof (BET formula), so that the specific surface area of the material was solved.

### 3) SEM test

The SEM characterization was performed on a transmission electron microscope with an operating voltage of 200kV to observe the structure of the anode material.

### 4) Test method for thickness of coating layer

The material was cut by a Focused Ion Beam-Scanning Electron Microscope FIB-SEM device, and the average thickness of the coating layer was measured in SEM.

### 5) Test method for volume ratio of aggregates in material particles:

20 particles of the prepared anode material were randomly obtained to perform SEM sectioning, in a SEM section of a single anode material particle, a number n_{A} of the primary particles in the section, a number n_{B} of the agglomerates formed by a plurality of primary particles connected in a first connection manner in the section is counted, a number nc of the aggregates formed by a plurality of primary particles connected in a second connection manner and connected in the first connection manner and the second connection manner were counted, where P = (n_{C}/(n_{A}+n_{B}+n_{C})) × 100%. An arithmetic average value of P values of the 20 anode material particles was the number proportion of the aggregates.

### 6) Test method for porosity of anode material

The anode material particles was tested by mercury porosimetry.

### 7) Test method of mass content of amorphous carbon in anode material

The mass content of the amorphous carbon was tested by the rmogravimetric analysis.

### 8) Coil battery testing

The electrochemical cycle performance was tested by the following method: the prepared anode material, a conductive agent and a binder were dissolved in water and mixed according to a mass ratio of 94: 1: 5, with the control of the solid content at 50%. The mixture was coated onto a copper foil current collector, followed by vacuum drying to produce the anode plate. A lithium ion battery was then assembled using a ternary nickel cobalt lithium manganate (NCM523) cathode plate, 1mol/L LiPF6/ethylene carbonate+dimethyl carbonate+methyl ethyl carbonate (v/v=1: 1: 1) electrolyte, a Celgard2400 membrane and a shell. The charging and discharging testing of the lithium ion battery was performed by a LAND cell test system produced by Wuhan Jinnuo Electronics Co., Ltd, under room temperature conditions, charging and discharging at 0.2C constant current, and the charging and discharging voltage was controlled to 2.75 V to 4.2 V, thus obtaining a first reversible capacity, a first charging capacity and a first discharging capacity. First Coulombic efficiency = first discharging capacity/ first charging capacity.

After the cycling was repeated for 50 times, a thickness H1 of the plate of the lithium ion battery was measured by a micrometer, where expansion rate after 50 cycles = (H1-H0)/H0×100%.

After the cycling was repeated for 100 times, the discharging capacity was recorded as the remaining capacity of the lithium ion battery, where the capacity retention rate = the remaining capacity/the first capacity×100%.

The embodiments of the present disclosure are further illustrated by the following several examples. The embodiments herein are not limited to the specific examples described below. Variations may be made as appropriate within the scope of the independent claims.

### Example 1

A method for preparing an anode material included the following steps.
(1) Nano-silicon was placed into a ball mill, and an n-butanol solvent was added with ball-milling dispersion for 5 hours to obtain an oil solution. A mass ratio of the nano-silicon in the oil solution was 33%, and a median particle size of the nano-silicon was 103nm. An aqueous solution containing glucose and cetyl trimethyl ammonium bromide (CTAB) was prepared, where the glucose: the CTAB: water=44: 2: 100, and stirred and dispersed to obtain a second solution. Then, the oil solution and the second solution were added into a homogenizer according to a mass ratio of 100: 48 for homogenization for 3 hours to obtain a mixed emulsion.
(2) The emulsion was stirred and dried with rotary evaporation at 200°C for 5 hours, and granulated to obtain a precursor.
(3) The precursor and a phenolic resin were mixed according to a mass ratio of 50: 45, and then mixed materials were placed into a high-temperature box furnace, and nitrogen was introduced. A carbonization treatment was carried out at 920°C and maintained for 4 hours.
(4) The carbonized product was crushed, sieved, and then graded to obtain an anode material.

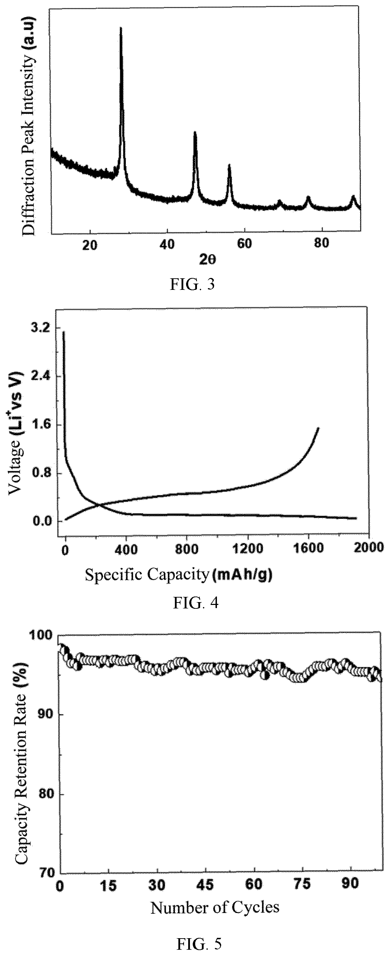

FIG. 2 is a scanning electron microscope SEM image of the anode material prepared in Example 1. FIG. 3 is an XRD image of the anode material prepared in Example 1. As shown in FIG. 2 and FIG. 3, the anode material prepared in this example included a composite and a carbon layer located on a surface of the composite, and the composite included a carbon matrix and an active material present in a the carbon matrix. The active material included primary particles, agglomerates and aggregates, and the primary particles were silicon particles. A thickness of the carbon layer was 49nm, and a number proportion of the aggregates in the active material was 20%.

### Example 2

A method for preparing an anode material included the following steps.
(1) Nano-silicon was placed into a ball mill, and a chloroform solvent was added with ball-milling dispersion for 3 hours to obtain an oil solution. A mass ratio of the nano-silicon in the oil solution is 23%, and a median particle size of the nano-silicon is 82nm. An aqueous solution containing sucrose and sodium alkylbenzene sulfonate was prepared, where the sucrose: the sodium alkylbenzene sulfonate: water=54: 1.2: 100, and stirred and dispersed to obtain a second solution. Then, the oil solution and the second solution were added into a homogenizer according to a mass ratio of 70: 40 for homogenization for 5 hours to obtain a mixed emulsion.
(2) The emulsion was stirred and dried with rotary evaporation at 400°C for 3 hours, and granulated to obtain a precursor.
(3) The precursor and a phenolic resin were mixed according to a mass ratio of 56: 45, and then mixed materials were placed into a high-temperature box furnace, and nitrogen was introduced. A carbonization treatment was carried out at 820°C and maintained for 4 hours.
(4) The carbonized product was crushed, sieved, and then graded to obtain an anode material.

The anode material prepared in this embodiment included a composite and a carbon layer located on a surface of the composite, and the composite included a carbon matrix and an active material located in the carbon matrix. The active material included primary particles, agglomerates and aggregates, and the primary particles were silicon particles. A thickness of the carbon layer was 53nm, and a number proportion of the aggregates in the active material was 14%.

### Example 3

A method for preparing an anode material included the following steps.
(1) Nano-silicon was placed into a ball mill, and a xylene solvent was added with ball-milling dispersion for 6 hours to obtain an oil solution. A mass ratio of the nano-silicon in the oil solution was 13%, and a median particle size of the nano-silicon is 140nm. An aqueous solution containing sucrose and sodium lauryl sulfate was prepared, where the sucrose: the sodium lauryl sulfate: water=54: 3.2: 100, and stirred and dispersed to obtain a second solution. Then, the oil solution and the second solution were added into a homogenizer according to a mass ratio of 80: 40 for homogenization for 5 hours to obtain a mixed emulsion.
(2) The emulsion was spray dried and granulated to obtain a precursor.
(3) The precursor and a glucose were mixed according to a mass ratio of 56: 65, and then mixed materials were placed into a high-temperature box furnace, and nitrogen was introduced. A carbonization treatment was carried out at 780°C and maintained for 4 hours.
(4) The carbonized product was crushed, sieved, and then graded to obtain an anode material.

The anode material prepared in this embodiment included a composite and a carbon layer located on a surface of the composite, and the composite included a carbon matrix and an active material located in the carbon matrix. The active material included primary particles, agglomerates and aggregates, and the primary particles were silicon particles. A thickness of the carbon layer was 58nm, and a number proportion of the aggregates in the active material was 26%.

### Example 4

A method for preparing an anode material included the following steps.
(1) Nano-silicon was placed into a ball mill, and an n-hexane solvent was added with ball-milling dispersion for 12 hours to obtain an oil solution. A mass ratio of the nano-silicon in the oil solution is 38%, and a median particle size of the nano-silicon is 55nm. An aqueous solution containing polyvinyl alcohol and lauroyl glutamic acid was prepared, where the polyvinyl alcohol: the Lauroyl Glutamate: water=54: 2.9: 100, and stirred and dispersed to obtain a second solution. Then, the oil solution and the second solution were added into a homogenizer according to a mass ratio of 50: 70 for homogenization for 2 hours to obtain a mixed emulsion.
(2) The emulsion was spray dried and granulated to obtain a precursor.
(3) The precursor and asphalt were mixed according to a mass ratio of 68: 40, and then mixed materials were placed into a high-temperature box furnace, and nitrogen was introduced. A carbonization treatment was carried out at 1020°C and maintained for 3 hours.
(4) The carbonized product was crushed, sieved, and then graded to obtain an anode material.

The anode material prepared in this embodiment included a composite and a carbon layer located on a surface of the composite, and the composite included a carbon matrix and an active material located in the carbon matrix. The active material included primary particles, agglomerates and aggregates, and the primary particles were silicon particles. A thickness of the carbon layer was 49nm, and a number proportion of the aggregates in the active material was 18%.

### Example 5

A method for preparing an anode material included the following steps.
(1) Nano-silicon was placed into a ball mill, and an epoxypropane solvent was added with ball-milling dispersion for 6 hours to obtain an oil solution. A mass ratio of the nano-silicon in the oil solution is 8%, and a median particle size of the nano-silicon is 38nm. An aqueous solution containing citric acid and fatty alcohol polyoxyethylene ether was prepared, where the citric acid: the fatty alcohol polyoxyethylene ether: water=64: 2.5: 100, and stirred and dispersed to obtain a second solution. Then, the oil solution and the second solution were added into a homogenizer according to a mass ratio of 50: 50 for homogenization for 4 hours to obtain a mixed emulsion.
(2) The emulsion was spray dried and granulated to obtain a precursor.
(3) The precursor and sucrose were mixed according to a mass ratio of 48: 60, and then mixed materials were placed into a high-temperature box furnace, and nitrogen was introduced. A carbonization treatment was carried out at 980°C and maintained for 3 hours.
(4) The carbonized product was crushed, sieved, and then graded to obtain an anode material.

The anode material prepared in this embodiment included a composite and a carbon layer located on a surface of the composite, and the composite included a carbon matrix and an active material located in the carbon matrix. The active material included primary particles, agglomerates and aggregates, and the primary particles were silicon particles. A thickness of the carbon layer was 52nm, and a number proportion of the aggregates in the active material was 8%.

### Example 6

Different from Example 1, in step (1), an added active material was nano-silicon and silicon-magnesium alloy.

The anode material prepared in this embodiment included a composite and a carbon layer located on a surface of the composite, and the composite included a carbon matrix and an active material located in the carbon matrix. The active material included primary particles, agglomerates and aggregates, and the primary particles were silicon particles and silicon-magnesium alloy particles. A thickness of the carbon layer was 48nm, and a number proportion of the aggregates in the active material was 18%.

### Example 7

Different from Example 1, in step (1), the added active material was nano-silicon monoxide SiO.

The anode material prepared in this embodiment included a composite and a carbon layer located on a surface of the granular composite, and the composite included a carbon matrix and an active material located in the carbon matrix. The active material included primary particles, agglomerates and aggregates, and the primary particles were SiO. A thickness of the carbon layer was 52nm, and a number proportion of the aggregates in the active material was 22%.

### Example 8

Different from Example 1, in step (1), an added active material was Ge.

The anode material prepared in this embodiment included a composite and a carbon layer located on a surface of the composite, and the composite included a carbon matrix and an active material located in the carbon matrix. The active material included primary particles, agglomerates and aggregates, and the primary particles were germanium particles. A thickness of the carbon layer was 48nm, and a number proportion of the aggregates in the active material was 19.4%.

### Example 9

A method for preparing an anode material included the following steps.
(1) Nano-silicon was placed into a ball mill, and an n-butanol solvent was added with ball-milling dispersion for 5 hours to obtain an oil solution. A mass ratio of the nano-silicon in the oil solution was 25%, and a median particle size of the nano-silicon was 98nm. An aqueous solution containing glucose and cetyl trimethyl ammonium bromide (CTAB) was prepared, where the glucose: the CTAB: water=44: 2: 100, and stirred and dispersed to obtain a second solution. Then, the oil solution and the second solution were added into a homogenizer according to a mass ratio of 100: 48 for homogenization for 3 hours to obtain a mixed emulsion.
(2) The emulsion was stirred and dried with rotary evaporation at 200°C for 6 hours, and granulated to obtain a precursor.
(3) The precursor was placed into a high-temperature box furnace, and nitrogen was introduced. A carbonization treatment was carried out at 920°C and maintained for 4 hours.
(4) The carbonized product was crushed, sieved, and then graded to obtain an anode material.

The anode material prepared in this embodiment included a composite, and the composite included a carbon matrix and an active material located in the carbon matrix. The active material included primary particles, agglomerates and aggregates, and the primary particles were silicon particles. A thickness of the carbon layer was 25nm, and a number proportion of the aggregates in the active material was 24%.

### Comparative Example 1

Different from Example 1, in step (1), no surfactant was added to the second solution.

The anode material prepared in this embodiment included a composite, and the composite included a carbon matrix and an active material located in the carbon matrix. The active material included primary particles, agglomerates and aggregates, and the primary particles were silicon particles. A thickness of the carbon layer was 44nm, and a number proportion of the aggregates in the active material was 39%.

### Comparison Example 2

Different from Example 1, step (1) did not perform the dispersion process.

The anode material prepared in this embodiment included a composite, and the composite included a carbon matrix and an active material located in the carbon matrix. The active material included primary particles, agglomerates and aggregates, and the primary particles were silicon particles. A thickness of the carbon layer was 45nm, and a number proportion of the aggregates in the active material was 43%.

### Comparison Example 3

Different from Example 1, (1) nano-silicon was placed into a ball mill, and a aqueous solvent was added with ball-milling dispersion for 5 hours to obtain a first solution. A mass ratio of the nano-silicon in the oil solution was 39%, and a median particle size of the nano-silicon was 107nm. An aqueous solution containing glucose and cetyl trimethyl ammonium bromide (CTAB) was prepared, where the glucose: the CTAB: water=44: 2: 100, and stirred and dispersed to obtain a second solution. Then, the first solution and the second solution were added into a homogenizer according to a mass ratio of 100: 48 for homogenization for 3 hours to obtain a mixed solution.

The anode material prepared in this embodiment included a composite, and the composite included a carbon matrix and an active material located in the carbon matrix. The active material included primary particles, agglomerates and aggregates, and the primary particles were silicon particles. A thickness of the carbon layer was 45nm, and a number proportion of the aggregates in the active material was 34%.

Performance tests were performed on the anode materials prepared in the examples and the comparative examples, and the results of the performance tests are shown in Table 1.

**Table 1. Performance Test Results Summary Table**

| Sample | Aggregate Ratio (%) | Coating Layer Thickness (nm) | Porosity (%) | Specific Surface Area (m²/g) | Carbon Content (%) | First Reversib le Capacity (mAh/g) | First Coulom bic Efficienc y (%) | 100 Cycles Capacity Retentio n Rate (%) | Expansi on Rate after 50 Cycles (%) |
|---|---|---|---|---|---|---|---|---|---|
| Example 1 | 20 | 49 | 2.1 | 3.1 | 43 | 1655 | 88.4 | 93.5 | 44 |
| Example 2 | 14 | 53 | 1.9 | 2.7 | 41 | 1618 | 88.2 | 93.2 | 42 |
| Example 2 | 26 | 58 | 3.9 | 2.2 | 39 | 1541 | 88.5 | 93.1 | 41.4 |
| Example 4 | 18 | 49 | 2.8 | 2.0 | 40 | 1601 | 88.4 | 92.8 | 41.2 |
| Example 5 | 8 | 52 | 2.4 | 1.9 | 45 | 1633 | 89.1 | 94.9 | 39.6 |
| Example 6 | 18 | 48 | 2.4 | 3.0 | 43 | 1515 | 89.4 | 93.6 | 42.2 |
| Example 7 | 22 | 52 | 2.1 | 2.1 | 45 | 1345 | 79.4 | 93.7 | 44.3 |
| Example 8 | 19.4 | 48 | 2.8 | 3.4 | 46 | 1275 | 90.4 | 94.5 | 45.5 |
| Example 9 | 24 | 25 | 7.1 | 17.1 | 23 | 1885 | 83.4 | 84.5 | 46.1 |
| Comparati ve Example 1 | 39 | 44 | 5.1 | 6.1 | 45 | 1649 | 86.8 | 85.3 | 55 |
| Comparati ve Example 2 | 43 | 45 | 9.1 | 8.1 | 43 | 1623 | 86.7 | 83.2 | 58 |
| Comparati ve Example 3 | 34 | 45 | 4.1 | 5.1 | 48 | 1666 | 87.8 | 88.0 | 52 |

FIG. 4 is a first charging and discharging curve of the anode material prepared in Example 1 of the present disclosure. As shown in FIG. 4, the anode material prepared in Example 1 has a higher first charge and discharge capacity and a higher first efficiency, which is because the agglomerated primary particles can affect the carrier transmission among the primary particles. The present disclosure can effectively improve the carrier transmission inside the particles of the composite by controlling the number proportion of the aggregates in the anode material within a preset range, so that the anode material has excellent electrochemical performance.

FIG. 5 is a cycle performance curve of the anode material prepared in Example 1 of the present disclosure. As shown in FIG. 5, the anode material has excellent cycle performance, and a capacity retention rate is 93.5% after 100 cycles. This is because the active material exists in the carbon matrix, which can effectively buffer the volume expansion of the active material dispersed in the carbon matrix, reduce the stress change in the expansion effect band of the active material, improve the cycle stability of the material, and reduce the expansion rate.

As shown in Table 1, the anode material prepared in Examples 1 to 9 includes the granular composite, and the composite includes the carbon matrix and the active material located in the carbon matrix. The active material includes the primary particles, the agglomerates and the aggregates, and the number proportion of the aggregates in the active material is smaller than or equal to 30%, so that the carrier transmission among the particles of the composite can be effectively improved, the structural stability of the material can be effectively improved, thereby reducing the stress change of the expansion effect band of the active material, and improving the cycle stability of the material, and reduce the expansion rate.

In the preparation process of the anode material of Comparative Example 1, no surfactant is added to the second solution, which leads to non-uniform dispersion of the nano-silicon and the easy formation of the aggregates, resulting in a high proportion of the aggregates in the final product, a deterioration in the electrochemical performance, and an obvious increase in a battery expansion rate.

In the preparation process of the anode material of Comparative Example 2, no dispersion treatment is performed, and the nano-silicon particles are naturally agglomerated together, resulting in a high aggregate ratio of the final product, a deterioration in electrochemical performance, and a significant increase in the battery expansion rate.

In the preparation process of the anode material of Comparative Example 3, the active material in step (1) is dispersed in an aqueous solution, and the aqueous solution and the second solution are homogenized to obtain a mixed solution. The mixed solution is dispersed in an aqueous phase system. On one hand, the nano-silicon is easy to be oxidized, resulting in a reduction of the first efficiency. On the other hand, the dispersion effect of the aqueous solution is smaller than the dispersion effect of an oil-water system, resulting in a higher aggregate ratio of the final product, and its electrochemical performance is smaller than that of the oil-water system.

Although the present disclosure is disclosed above in terms of preferred examples, it is not intended to limit the claims, and several possible changes and modifications can be made by those skilled in the art without departing from the concept of the present disclosure, so the protection scope of the present disclosure should be defined by the claims of the present disclosure.

## Claims

1. An anode material, comprising a composite, wherein the composite comprises a carbon matrix and an active material located in the carbon matrix, and the active material comprises primary particles and/or agglomerates, and aggregates; and a proportion of the aggregates in a total number of the primary particles, the agglomerates, and the aggregates is smaller than or equal to 30%.

2. The anode material according to claim 1, wherein the active material comprises at least one of Li, Na, K, Sn, Ge, Si, SiOₓ, Fe, Mg, Ti, Zn, Al, P, Cu, and a silicon alloy, where 0<x≤2.

3. The anode material according to claim 1, wherein the active material comprises a silicon-based active material, and the silicon-based active material comprises at least one of crystalline silicon, amorphous silicon, and a silicon alloy.

4. The anode material according to claim 1, comprising at least one of following features (1) to (2):
(1) the agglomerates comprise the primary particles connected in a first connection manner, and the first connection manner comprises at least one of an angle-angle connection and an edge-angle connection; and
(2) a proportion of the a total number of the agglomerates and the primary particles among a total number of the primary particles, the agglomerates and the aggregates is greater than or equal to 70%.

5. The anode material according to claim 1, wherein the aggregates comprise the primary particles connected in a second connection manner, and the second connection manner comprises at least one of an edge-to-edge connection and an embedding connection.

6. The anode material according to claim 1, further comprising a coating layer located on at least a part of a surface of the composite.

7. The anode material according to claim 6, wherein the coating layer comprises at least one of following features (1) to (2):
(1) the coating layer comprises at least one of a carbon layer, a graphene layer, a silicon nitride layer, a titanium nitride layer and a silicon carbide layer; and
(2) a thickness of the coating layer ranges from 5nm to 500nm.

8. The anode material according to claim 1, wherein a median particle size of the primary particles ranges from 1nm to 500nm.

9. The anode material according to any one of claims 1 to 8, comprising at least one of following features (1) to (4):
(1) a median particle size of the anode material ranges from 0.5µm to 30µm;
(2) a specific surface area of the anode material is smaller than or equal to 10m²/g;
(3) a porosity of the anode material is smaller than or equal to 10%; and
(4) a sphericity degree of the anode material ranges from 0.7 to 1.0.

10. A lithium ion battery, comprising an anode material according to any one of claims 1 to 9.
